# EUROPÄISCHE PATENTSCHRIFT

(11) **EP 2 503 929 B1**
(45) Veröffentlichungstag und Bekanntmachung des Hinweises auf die Patenterteilung: **14.05.2014**
(21) Anmeldenummer: 10779501.5
(22) Anmeldetag: 05.11.2010
(51) Int. Cl.: A47J 43/07

(54) **KÜCHENGERÄT MIT VERARBEITUNGSBEHÄLTER**
KITCHEN APPLIANCE HAVING A PROCESSING CONTAINER
USTENSILE DE CUISINE DOTÉ D'UN CONTENANT DE TRAITEMENT

(30) Priorität: 24.11.2009 DE 102009047087
(43) Veröffentlichungstag der Anmeldung: 03.10.2012
(73) Patentinhaber: BSH Bosch und Siemens Hausgeräte GmbH, 81739 München (DE)
(72) Erfinder: RUDEZ, Darko, 3230 Sentjur (SI); BERZELAK, Matej, 3330 Mozirje (SI); PESEC, Jurij, 3301 Petrovce (SI)
(74) Vertreter: Marton, Dan-Robert
(86) Internationale Anmeldenummer: PCT/EP2010/066915
(87) Internationale Veröffentlichungsnummer: WO 2011/064080

(56) Entgegenhaltungen:
- DE-T2- 60 305 074
- GB-A- 2 094 136
- US-A- 4 190 208

## Beschreibung

### Hintergrund der Erfindung

Die vorliegende Erfindung betrifft ein Küchengerät, insbesondere Küchenmaschine oder Food Processor, mit einem Verarbeitungsbehälter, einem Deckel für den Verarbeitungsbehälter und einem von einer Antriebseinheit um eine Rotationsachse angetriebenen Verarbeitungswerkzeug zum Verarbeiten von Lebensmitteln.

### Stand der Technik

Ein Küchengerät dieser Art ist beispielsweise aus der US 4 190 208 A oder der DE 603 05 074 T2 bekannt. Die Küchenmaschine umfasst ein Werkzeug, welches in einer Schüssel mit Hilfe einer Antriebseinheit betrieben wird. Die Küchenmaschine weist einen Deckel auf, welcher die Lebensmittelschüssel abdeckt und verhindert, dass das rotierende Werkzeug die Lebensmittel aus der Schüssel herausschleudert. Die Lebensmittelschüssel weist eine Seitenwand, entlang welcher das Werkzeug rotiert, auf. In diesem Bereich bildet sich ein relativ schmaler Spalt, der entsprechend klein gehalten werden muss, damit unverarbeitete Lebensmittel nicht in die Schüssel hineinfallen. Es ist gewünscht, dass sich in der Schüssel ausschließlich durch das Werkzeug verarbeitetes Lebensmittelgut sammeln kann. Das Werkzeug wird um eine Achse rotierend angetrieben, so dass konstruktionsbedingt durch die Zentrifugalkräfte die Lebensmittel in Richtung des Spalts geschleudert werden. Bei längerem Betrieb bildet sich eine Lebensmittelschicht im Bereich des Spalts, welche zu einem Reibkontakt zwischen der unbeweglichen Seitenwand der Schüssel und dem rotierenden Werkzeug führt. Durch diese flächige entlang des gesamten Umfangs des Deckels auftretende Lebensmittelschicht entsteht Reibungswärme, welche zu einer Zerstörung der Bauteile der Küchenmaschine führen kann.

Eine Möglichkeit zur Lösung dieses Problems ist die Vergrößerung des Abstandes zwischen Außenumfang des Werkzeugs und Schüssel-Innenwand oder die Verwendung spezieller Materialien, die unanfällig gegen Wärme sind. Beide dieser Lösungen haben sich jedoch als ungeeignet herausgestellt, da einerseits durch die Vergrößerung des Abstandes unverarbeitete Lebensmittel in die Schüssel gelangen können, welches für einen Benutzer der Küchenmaschine unzufriedenstellend ist, und weiter ist die Verwendung von speziellen wärmeresistenten Materialien teuer in der Herstellung.

### Der Erfindung zugrundeliegende Aufgabe

Der Erfindung liegt die Aufgabe zugrunde, ein verbessertes Küchengerät der eingangs genannten Art bereitzustellen, welches die vorstehend angeführten Probleme beseitigt und kostengünstig in der Herstellung ist.

### Erfindungsgemäße Lösung

Die Lösung der gestellten Aufgabe gelingt durch ein Küchengerät mit den Merkmalen des Anspruchs 1. Vorteilhafte Aus- und Weiterbildungen, welche einzeln oder in Kombination miteinander eingesetzt werden können, sind Gegenstand der abhängigen Ansprüche.

Die erfindungsgemäße Lösung gelingt durch ein Küchengerät, insbesondere Küchenmaschine oder Food Processor, mit einem Verarbeitungsbehälter, einem Deckel für den Verarbeitungsbehälter und einem von einer Antriebseinheit um eine Rotationsachse angetriebenen Verarbeitungswerkzeug zum Verarbeiten von Lebensmitteln, wobei das Verarbeitungswerkzeug mindestens einen Mitnehmer zum mechanischen Lösen einer sich im Betrieb des Küchengeräts bildenden am Deckel und/oder Verarbeitungsbehälter anhaftenden Lebensmittelschicht aufweist.

Die Mitnehmer lösen die Lebensmittelschicht, welche im Wesentlichen statisch am Deckel und/oder Verarbeitungsbehälter anhaftet. Die statische Lebensmittelschicht entsteht durch die Zentrifugalkraft des rotierend angetriebenen Werkzeugs, wodurch Lebensmitteln auf den Deckel und/oder Verarbeitungsbehälter im Bereich des rotierenden Werkzeugs geschleudert werden. Durch die Mitnehmer wird die Lebensmittelschicht wieder gelöst, so dass keine Reibung in diesem Bereich entstehen kann. Die Reibung erzeugt Reibungswärme, welches zu einer Zerstörung des Küchengeräts und insbesondere des Verarbeitungswerkzeugs führen kann. Dies wird erfindungsgemäß durch den Einsatz von Mitnehmern vermieden.

### Bevorzugte Ausgestaltung der Erfindung

Bevorzugt weist das Verarbeitungswerkzeug einen um die Rotationsachse verlaufenden Randbereich auf. Der Randbereich verläuft im Wesentlichen benachbart zum Deckel und/oder Verarbeitungsbehälter in dem Abschnitt, in welchem die Lebensmittelschicht anhaftet. Der Randbereich definiert somit den kritischen Abschnitt an welchem die Reibungswärme entstehen kann.

Es ist bevorzugt, dass der mindestens eine Mitnehmer an dem Randbereich angeordnet ist. Durch diese erfindungsgemäße Anordnung der Mitnehmer kann die Lebensmittelschicht effektiv mechanisch gelöst werden, da der Randbereich im Betrieb der Küchenmaschine den kritischen Abschnitt durchläuft, an welchem die Lebensmittelschicht anhaftet.

Zweckmäßigerweise verläuft der Randbereich entlang einer Innenfläche des Deckels und/oder des Verarbeitungsbehälters. Diese Innenfläche, entspricht der Fläche auf welcher die Lebensmittelschicht bedingt durch Zentrifugalkräfte anhaftet. Diese Innenfläche kann bevorzugt durch eine Innenwand des Deckels definiert werden, jedoch kann diese auch der Innenwand des Verarbeitungsbehälters entsprechen. Auch denkbar ist, dass die Innenfläche durch beide Innenwände definiert werden kann, falls beispielsweise die Nahtstelle zwischen Deckel und Verarbeitungsbehälter entlang des Randbereichs des Verarbeitungswerkzeugs verläuft.

Erfindungsgemäß ist das Verarbeitungswerkzeug rotationssymmetrisch mit einem Kreisumfang im Randbereich ausgebildet, wobei auf dem Kreisumfang eine Vielzahl an Mitnehmern angeordnet ist. Somit ist das Verarbeitungswerkzeug leicht herstellbar und im Betrieb kann ein ruhiger Lauf ohne Unwucht erreicht werden.

Bevorzugt sind mindestens zwei Mitnehmer symmetrisch auf dem Kreisumfang angeordnet, dergestalt dass der Kreisbogenabstand zwischen den Mitnehmern jeweils gleich ist. Durch die symmetrische Anordnung der Mitnehmer auf dem Kreisumfang, wird die anhaftende Lebensmittelschicht besonders effektiv gelöst.

Erfindungsgemäß bevorzugt weist der mindestens eine Mitnehmer einen Axialbereich auf, der im Wesentlichen parallel zur Rotationsachse verläuft. Der Axialbereich kann die Lebensmittelschicht lösen, welche am Deckel und/oder Verarbeitungsbehälter- axial anhaftet, lösen.

Erfindungsgemäß bevorzugt weist der mindestens eine Mitnehmer einen Radialbereich auf, der sich in Bezug auf die Rotationsachse radial erstreckt. So kann die Lebensmittelschicht welche sich radial im Randbereich des Verarbeitungswerkzeugs am Deckel und/oder Verarbeitungsbehälter bildet, effektiv lösen.

Insbesondere weist der Randbereich eine umlaufende Kante auf, auf welcher der mindestens eine Mitnehmer angeordnet ist, wobei der Axialbereich des mindestens einen Mitnehmers von der umlaufenden Kante in Richtung des Deckels herausragt. Der somit ausgeführte Axialbereich des mindestens einen Mitnehmers, kann vorteilhaft, die an der Deckelinnenwand anhaftende Lebensmittelschicht im Bereich der Kante erfindungsgemäß mechanisch lösen.

Bevorzugt weist der Randbereich eine umlaufende Außenfläche auf, auf welcher der mindestens eine Mitnehmer angeordnet ist, wobei der Radialbereich des mindestens einen Mitnehmers in Richtung des Deckels und/oder Verarbeitungsbehälter aus der Außenfläche herausragt. Der Radialbereich des Mitnehmers auf der umlaufenden Außenfläche kann die Lebensmittelschicht erfindungsgemäß lösen bzw. entfernen. So wird der Spalt zwischen der Außenfläche des Verarbeitungswerkzeugs und/oder Deckel bzw. Verarbeitungsbehälter frei von der reibung-erzeugenden Lebensmittelschicht gehalten.

Es ist bevorzugt, dass der mindestens eine Mitnehmer integral mit dem Verarbeitungswerkzeug ausgebildet ist. Somit kann ein robustes Verarbeitungswerkzeug bereitgestellt werden.

Das Verarbeitungswerkzeug samt Mitnehmer kann aus Kunststoff beispielsweise in einem Spritzgußverfahren hergestellt werden.

Zwischen dem Randbereich des Verarbeitungswerkzeugs und dem Deckel kann ein Spalt ausgebildet sein, in welchem der Axialbereich des Mitnehmers rotiert. Die Lebensmittelschicht, welche in diesem Bereich am Deckel anhaftet, kann folglich entfernt werden.

Erfindungsgemäß bevorzugt ist zwischen dem Randbereich des Verarbeitungswerkzeugs und dem Deckel ein weiterer radial verlaufender Spalt ausgebildet, in welchem der Radialbereich des Mitnehmers rotiert. Auch die in diesem Bereich anhaftende Lebensmittelschicht kann somit gelöst werden.

Ferne weist das Verarbeitungswerkzeug einen Antriebsbereich auf, der mindestens einen Antriebsmitnehmer umfasst, der im Wesentlichen einen zur Rotationsachse parallel verlaufenden Antriebsmitnehmeraxialbereich aufweist. Durch diesen Antriebsmitnehmer kann die Lebensmittelschicht, welche unmittelbar an der Rotationsachse im Bereich des Antriebes bzw. der Antriebseinheit anhaften kann, erfindungsgemäß entfernt werden.

### Kurzbeschreibung der Zeichnungen

Weitere vorteilhafte Ausgestaltungen werden nachfolgend an Hand eines in der Zeichnung dargestellten Ausführungsbeispieles, auf welches die Erfindung jedoch nicht beschränkt ist, näher beschrieben.

Es zeigen schematisch:
- Fig. 1: Küchengerät mit seinen Komponenten;
- Fig. 2: eine Detailansicht der vorliegenden Erfindung;
- Fig. 3: eine perspektivische Ansicht auf ein erfindungsgemäßen Verarbeitungswerkzeug; und schließlich
- Fig. 3a, 3b, 3c: jeweils eine Detailansicht auf einen Mitnehmer gemäß eines Ausführungsbeispiels.

### Ausführliche Beschreibung anhand eines Ausführungsbeispiels

Bei der nachfolgenden Beschreibung einer bevorzugten Ausführungsform der vorliegenden Erfindung bezeichnen gleiche Bezugszeichen gleiche oder vergleichbare Komponenten.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

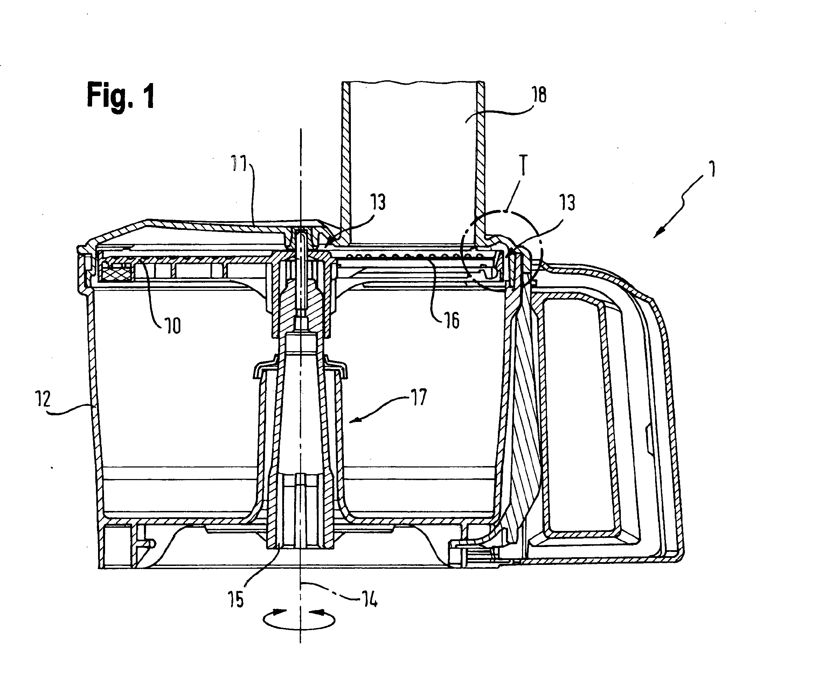

Fig. 1 zeigt einen Küchengerät 1 gemäß der vorliegenden Erfindung. Das Küchengerät 1 kann ein Food Processor (Foodprocessor) oder eine Küchenmaschine sein, und wird bei der Verarbeitung verschiedenster Lebensmitteln eingesetzt. Mit dem Küchengerät kann beispielsweise Teig geknetet werden, oder Lebensmitteln in Scheiben geschnitten werden. Durch den Einsatz verschiedener Aufsätze 16 kann beispielsweise auch geraspelt oder geschnetzelt werden.

Das Küchengerät weist ein Gehäuse (nicht dargestellt) auf, welches unter anderem einen Elektromotor zum Antreiben einer Antriebseinheit aufnehmen kann. Innerhalb des Gehäuses befinden sich ebenfalls die Stromversorgungseinrichtungen und die Steuerung für den Elektromotor. Die Steuerung wird mittels einer Bedieneinheit von einem Benutzer kontrolliert, so dass die Lebensmittel verarbeitet werden können. Das Küchengerät weist ferner ein Getriebe auf, welches mittels einer Kupplung die Antriebseinheit 15 des Küchengeräts antreibt. Aus Gründen der Übersichtlichkeit wird das Getriebe nicht näher dargestellt. Die Antriebseinheit 15 rotiert in einem Verarbeitungsbehälter 12 und kann ein geeignetes Verarbeitungswerkzeug 10 um die Rotationsachse 14 antreiben.

Der Verarbeitungsbehälter bzw. Lebensmittelschüssel 12 weist einen Deckel 11 auf, welcher den Verarbeitungsbehälter 12 schließt.

Der Verarbeitungsbehälter 12 wird mit Hilfe einer geeigneten Verbindungseinrichtung auf das Gehäuse des Küchengeräts 1 aufgesetzt, und die Kupplung für die Antriebseinheit 15 kann mit dem Getriebe des Elektromotors zusammenwirken, so dass das Verarbeitungswerkzeug 10 angetrieben werden kann.

Der Boden der Schüssel 12 weist einen domförmigen bzw. säulenförmigen Abschnitt 17 auf durch welchen die Antriebseinheit 15 hindurchgeführt ist. Am oberen Ende der Antriebseinheit 15 wird mittels einer weiteren Kupplung das Verarbeitungswerkzeug 10 rotationsfest montiert. Die Antriebseinheit 15 wird von einem Motor angetrieben und rotiert um die Rotationsachse 14. Das Verarbeitungswerkzeug 10, welches gemäß dieser Ausführungsform rotationssymmetrisch ausgeführt ist, rotiert ebenfalls um die Rotationsachse 14 und kann verschiedene Lebensmitteln verarbeiten.

In dieser Ausführungsform wird das Verarbeitungswerkzeug unmittelbar an dem offenen ende des Verarbeitungsbehälters 12 betrieben, so dass die verarbeiteten Lebensmittel in den Behälter 12 unterhalb des Verarbeitungswerkzeugs 10 gesammelt werden können. Es ist jedoch denkbar, dass andere Strukturen bzw. Anordnungen des Verarbeitungswerkzeugs realisierbar sind, welche ebenfalls die erfindungsgemäße Lösung verkörpern. So ist es denkbar, dass das Verarbeitungswerkzeug 10 unmittelbar oberhalb des Bodens des Behälters 12 rotiert, oder auch denkbar ist mehrere Werkzeuge 10 auf unterschiedlichen Höhen auf der Antriebseinheit 15 anzuordnen.

In dieser Ausführungsform ist das Verarbeitungswerkzeug 10 kreisscheibenförmig ausgebildet und ist mit einem Fenster versehen, in welches ein Aufsatz 16 für die Verarbeitung von Lebensmitteln einsetzbar ist. So können unterschiedliche Aufsätze 16 für unterschiedliche Vorgänge, wie Raspeln oder Scheibenschneiden, eingesetzt werden.

Der Behälter 12 wird mittels eines Deckels 11 verschlossen. Der Deckel weist eine zylindrische Öffnung 18, welche sich aus dem Deckel 11 turmförmig erstreckt. Diese Öffnung 18 dient als Einfüllöffnung für die zu verarbeitenden Lebensmitteln und durch die turmförmige Gestalt, kann ein Herausschleudern der Lebensmittel verhindert werden. Im Betrieb des Küchengeräts 1 rotiert das Werkzeug 10 um die Rotationsachse 14 und die Lebensmittel, welche durch die Öffnung eingefüllt werden, können mittels des Aufsatzes 16 auf dem Verarbeitungswerkzeug verarbeitet werden.

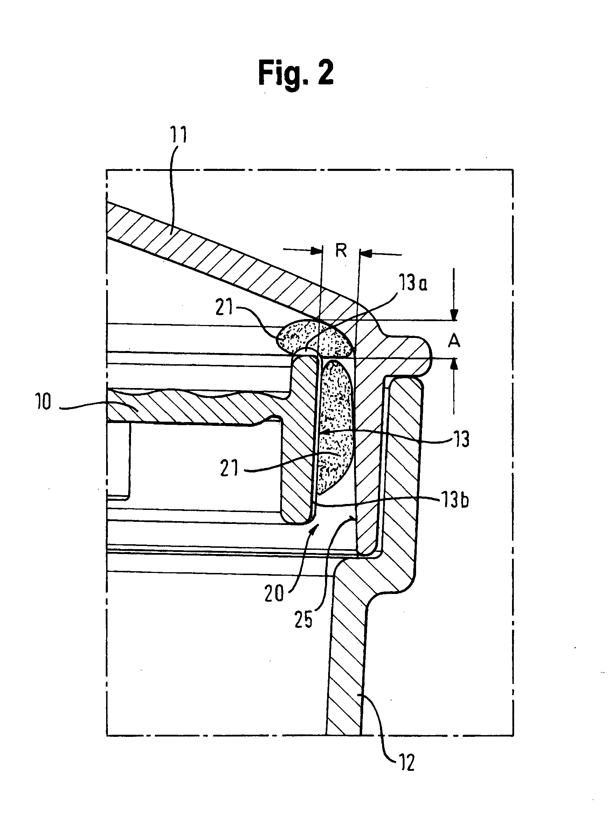

Die bereits verarbeiteten Lebensmittel werden in der Schüssel 12 bzw. Behälter 12 gesammelt. Durch die Zentrifugalkraft werden die Lebensmittel in Richtung des Randbereichs 20 des Verarbeitungswerkzeugs geschleudert, wo sie an der Innenwand bzw. Innenfläche 25 des Deckels eine Lebensmittelschicht 21 bilden, welche auf der Innenfläche 25 im Wesentlichen statisch anhaftet. Durch diese Lebensmittelschicht 21 und das um die Achse 14 rotierende Werkzeug entsteht folglich Reibungswärme, welches zu einer Verschmelzung der Bauteile des Küchengeräts führen kann. In Fig. 2 ist schematisch die anhaftende Lebensmittelschicht 21 dargestellt, welche an der Innenfläche 25 des Deckels 11 anhaftet. Gemäß einer weiteren Ausführungsform des Küchengeräts 1 kann der Decke 11 dergestalt ausgebildet sein, dass die Innenfläche 25 durch die Innenwand der Schüssel 12 und der Innenwand des Deckels gebildet sein kann. In diesem Fall würde der Deckel 11 nicht so weit in das Innere der Schüssel 12 hineinragen, und folglich würde die Lebensmittelschicht am Deckel 11 und auch an der Innenseite der Schüssel 12 anhaften.

Ferner kann sich eine Lebensmittelschicht 21 auch im Bereich des Antriebes 35 bilden. Erfindungsgemäß kann das Verarbeitungswerkzeug 10 in dem Antriebsbereich 35 ebenfalls Mitnehmer 13 aufweisen, welche die anhaftende Lebensmittelschicht 21 in diesem Bereich mechanisch lösen können, so dass keine Reibungswärme zwischen rotierendem Werkzeug 10 und Deckel 11 entstehen kann.

Fig. 2 zeigt den Abschnitt T des in der Fig. 1 dargestellten Küchengeräts 1. Zwischen dem Verarbeitungswerkzeug und dem Deckel 11 bildet sich ein Spalt, in welchem sich eine am Deckel 11 anhaftende Lebensmittelschicht 21 bildet. Falls der Deckel 11 jedoch nicht so weit in die Schüssel 12 hineinragt, würde die Lebensmittelschicht 21 auch am Verarbeitungsbehälter 12 anhaften. Gemäß dieser nicht einschränkenden Ausführungsform der vorliegenden Erfindung bildet sich der Spalt zwischen Deckelinnenwand 25 und umlaufende Außenfläche 30 des Randbereichs 20 des Verarbeitungswerkzeugs 10. Der Spalt erstreckt sich in Bezug auf die Rotationsachse 14 des Verarbeitungswerkzeugs 10 in radialer Richtung R und in axialer Richtung A. Die Lebensmittelschicht 21 haftet bedingt durch die Zentrifugalkraft bevorzugt in mit dem Randbereich des Werkzeugs 10 benachbarten Innenfläche 25 des Deckels 11, wo Reibungswärme entstehen kann. Um diese Lebensmittelschicht 21 zu lösen, weist das Verarbeitungswerkzeug 10 im Randbereich 20 erfindungsgemäß eine Vielzahl an Mitnehmern 13, welche sich radial und/oder axial erstrecken. Die Mitnehmer weisen einen Radialbereich 13b und einen Axialbereich 13a auf, welche die an der Deckelinnenfläche 25 anhaftende Lebensmittelschicht 21 lösen bzw. abtragen kann. Der Radialbereich 13b des Mitnehmers 13 erstreckt sich in dem Spalt zwischen Außenfläche 31 des Randbereich 21 und Innenfläche 25 des Deckels und wiederum der Axialbereich 13a des Mitnehmers 13 ragt aus der umlaufende Kante des Randbereich 21 in Richtung zum Deckel 11 heraus. Die jeweiligen Bereiche 13 bzw. 13b des Mitnehmers 13 bewirken, dass die anhaftende Lebensmittelschicht gelöst werden kann, so dass keine Reibung zwischen Verarbeitungswerkzeug 10 und Deckel 11 und/oder Verarbeitungsbehälter 12 entstehen kann.

Im Folgenden wird ein mögliches Ausführungsbeispiel der erfindungsgemäßen Mitnehmer 13 genauer dargestellt.

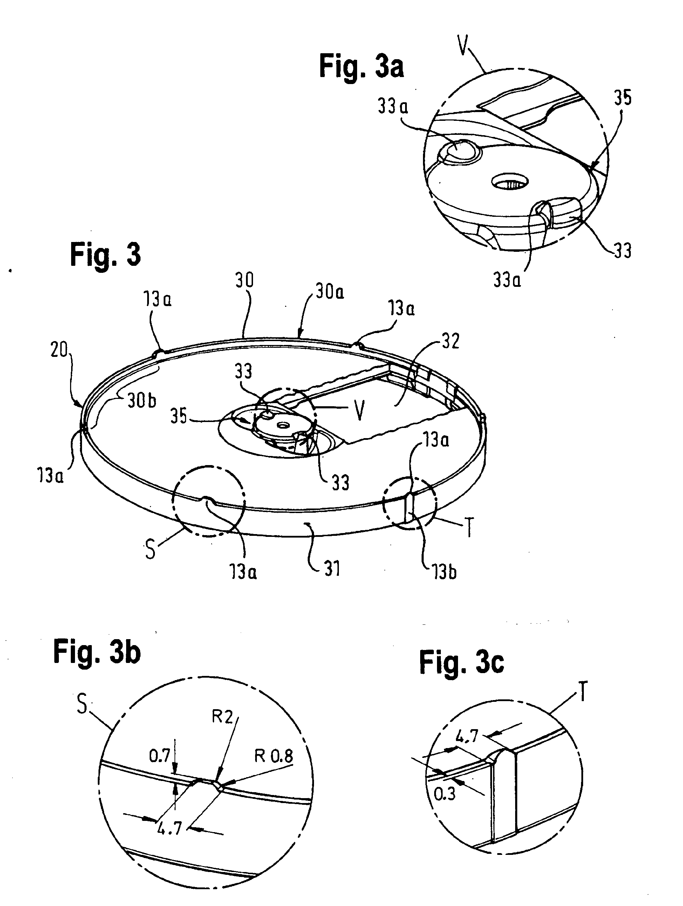

Fig. 3 zeigt eine perspektivische Draufsicht auf ein Verarbeitungswerkzeug 10 gemäß der vorliegenden Erfindung. Das Verarbeitungswerkzeug 10 kann beispielsweise in ein Küchengerät 1 eingesetzt werden, und wird mit Hilfe einer Antriebseinheit 15 rotierend angetrieben. Das Verarbeitungswerkzeug 10 ist im Wesentlichen als Kreisscheibe ausgebildet und erstreckt sich symmetrisch um die Rotationsachse 14. Das Verarbeitungswerkzeug 10 umfasst im Bereich der Verbindung mit der Antriebseinheit 15 einen Antriebsbereich 35, welcher unmittelbar an der Rotationsachse 14 angeordnet ist. Um eine sich dort aufbauende Lebensmittelschicht 21 mechanisch lösen zu können umfasst der Antriebsbereich zwei Mitnehmer 33, die jeweils einen Axialbereich 33a aufweisen, der sich in Richtung zum Deckel 11 erstrecken. Folglich kann dort eine reibungswärmeerzeugende Lebensmittelschicht 21 erfindungsgemäß durch die Antriebsmitnehmer 33 mechanisch gelöst werden. Der Abschnitt V des Verarbeitungswerkzeugs wird in der Fig. 3a vergrößert dargestellt.

Das Verarbeitungswerkzeug 10 weist ein rechteckiges Fenster 32 auf, welches unterschiedliche Aufsätze 16 aufnehmen kann. So kann das Verarbeitungswerkzeug 10 flexibel eingesetzt werden, da unterschiedliche Lebensmittel verarbeitet werden können.

Das Verarbeitungswerkzeug 10 weist im Randbereich 20 eine umlaufende Außenfläche 31 und eine umlaufende Kante 30 auf. Auf der umlaufenden Außenfläche 30 kann der Radialbereich 13b eines Mitnehmers 13 ausgebildet sein. Durch den rotationssymmetrischen Aufbau des Verarbeitungswerkzeugs 10 wird ein Kreisumfang 30a definiert, welcher in diesem Ausführungsbeispiel entlang der Kante 30 verläuft. Auf der Kante 30 sind gemäß dieser Ausführungsform sechs Mitnehmer 13 angeordnet, welche jeweils einen Axialbereich 13a aufweisen. Der Axialbereich 13a ist in der Fig. 3b vergrößert dargestellt. Der Axialbereich 13a des Mitnehmers löst die Lebensmittelschicht 21, welche sich entlang des Kreisumfangs 30a bzw. der Kante 30 am Deckel 11 des Küchengeräts bildet bzw. anhaftet. Die Dimensionen des so ausgebildeten Mitnehmers sind in der Fig. 3b genauer angezeigt. Der Axialbereich 13 hat im Wesentlichen die Form eines Kreissegmentes, das aus der Kante 30 in Richtung zum aufgesetzten Deckel 11 herausragt. Bevorzugt beträgt der Wert des Radius 0,8 mm, die Segmenthöhe 0,7 mm und die Kreissehne 4,7 mm. Diese Werte haben sich als besonders bevorzugt für den Axialbereich 13a herausgestellt. Die sechs Mitnehmer 13 gemäß dieser Ausführungsform sind auf dem Kreisumfang 30a angeordnet und weisen den gleichen Abstand 30b zueinander auf. Somit definieren die Mitnehmer 13 jeweils sechs symmetrische Kreissegmente entlang des Kreisumfanges 30a.

Gemäß einer möglichen Ausführungsform weisen nicht alle sechs realisierten Mitnehmer 13 einen jeweiligen Radialbereich 13b auf. So sind beispielweise nur zwei Mitnehmer mit einem Radialbereich 13b versehen. Die jeweiligen Radialbereiche 13b ragen aus der Oberfläche 31 des Randbereichs 20 in Richtung der Schüsselwand oder Deckelinnenwand 25 heraus. So kann die dort anhaftende Lebensmittelschicht 21 gelöst werden. Die jeweiligen Radialbereiche 13b sind auf der Außenfläche 31 des Verarbeitungswerkzeugs ausgebildet und weisen eine quaderförmige Gestalt mit einem Rechteck als Grundfläche. Die Grundfläche ist auf der Oberfläche 31 angeordnet und die entsprechenden Dimensionen sind in der Fig. 3c dargestellt. So entspricht eine Kante der Kreissehne des Axialbereichs 13a und beträgt 4,7 mm. Die Höhe des Quaders entspricht 0,3 mm. Dieser Wert muss genau zur Deckelinnenfläche 25 angepasst werden. Die dritte Quaderkante kann entsprechend der Höhe des kreisscheibenförmigen Verarbeitungswerkzeugs 10 angepasst werden. Es ist denkbar, dass der Radialbereich 13b eines Mitnehmers jedoch nicht über die gesamte Außenfläche 31 ausgebildet ist.

Diese zwei Mitnehmer mit einem jeweiligen Radialbereich 13b sind gemäß dieser Ausführungsform diametral-symmetrisch angeordnet. D.h. sie sind auf dem Kreisumfang 30 gegenüberliegend an den durch den Diameter definierten Punkten auf dem Umfang 30a angeordnet.

Durch den Einsatz der erfindungsgemäßen Mitnehmer 13 am Randbereich 20 des Verarbeitungswerkzeugs 10 wird die anhaftende Lebensmittelschicht 21 mechanisch gelöst, so dass keine Reibungswärme durch das rotierende Verarbeitungswerkzeug 10 entstehen kann, welches zu einer Zerstörung oder Verformung der Bauteile eines Küchengeräts 1 führen kann. Durch die integrale Ausbildung der Mitnehmer 13 am Verarbeitungswerkzeug 10 können weiterhin günstige Materialien wie Kunststoff eingesetzt werden.

### Bezugszeichenliste

- 1: Küchengerät, Küchenmaschine oder Food Processor
- 10: Verarbeitungswerkzeug
- 11: Deckel
- 12: Verarbeitungsbehälter
- 13: Mitnehmer
- 13a: Axialbereich des Mitnehmers
- 13b: Radialbereich des Mitnehmers

- 14: Rotationsachse
- 15: Antriebseinheit
- 16: Aufsatz
- 17: Säulenförmiger Abschnitt
- 18: Öffnung des Deckels
- 20: Randbereich
- 21: Lebensmittelschicht
- 25: Innenfläche des Deckels
- A: Spalt
- R: Radial verlaufender Spalt zwischen Deckel und Verarbeitungswerkzeug
- 30: Kante
- 30a: Kreisumfang des Randbereichs
- 30b: Abstand auf dem Kreisbogen
- 31: Außenfläche des Randbereichs
- 32: Fenster
- 33: Antriebsmitnehmer
- 33a: Axialbereich des Antriebsmitnehmers
- 35: Antriebsbereich

## Patentansprüche

1. Küchengerät (1), insbesondere Küchenmaschine oder Food Processor, mit einem Verarbeitungsbehälter (12), einem Deckel (11) für den Verarbeitungsbehälter (12) und einem von einer Antriebseinheit (15) um eine Rotationsachse (14) angetriebenen Verarbeitungswerkzeug (10) zum Verarbeiten von Lebensmitteln, wobei das Verarbeitungswerkzeug (10) mindestens einen Mitnehmer (13) zum mechanischen Lösen einer sich im Betrieb des Küchengeräts bildenden am Deckel (11) und/oder Verarbeitungsbehälter (12) anhaftenden Lebensmittelschicht (21) aufweist, **dadurch gekennzeichnet, dass** das Verarbeitungswerkzeug (10) rotationssymmetrisch mit einem Kreisumfang (30a) im Randbereich (20) ausgebildet ist, wobei auf dem Kreisumfang (30a) eine Vielzahl an Mitnehmern (13) angeordnet ist.

2. Küchengerät (1) nach Anspruch 1, **dadurch gekennzeichnet, dass** das Verarbeitungswerkzeug (10) einen um die Rotationsachse (14) verlaufenden Randbereich (20) aufweist.

3. Küchengerät (1) nach Anspruch 1 oder 2, **dadurch gekennzeichnet, dass** der mindestens eine Mitnehmer (13) an dem Randbereich (20) angeordnet ist.

4. Küchengerät (1) nach einem der vorherigen Ansprüche, **dadurch gekennzeichnet, dass** der Randbereich (20) entlang einer Innenfläche (25) des Deckels (11) und/oder des Verarbeitungsbehälters (12) verläuft.

5. Küchengerät (1) nach Anspruch 1, **dadurch gekennzeichnet, dass** mindestens zwei Mitnehmer (13) symmetrisch auf dem Kreisumfang (30a) angeordnet sind, dergestalt dass der Kreisbogenabstand (30b) zwischen den Mitnehmern (13) jeweils gleich ist.

6. Küchengerät (1) nach einem der vorherigen Ansprüche, **dadurch gekennzeichnet, dass** der mindestens eine Mitnehmer (13) einen Axialbereich (13a) aufweist, der im Wesentlichen parallel zur Rotationsachse (14) verläuft.

7. Küchengerät (1) nach einem der vorherigen Ansprüche, **dadurch gekennzeichnet, dass** der mindestens eine Mitnehmer (13) einen Radialbereich (13b) aufweist, der sich in Bezug auf der Rotationsachse (14) radial erstreckt.

8. Küchengerät (1) nach einem der vorherigen Ansprüche, **dadurch gekennzeichnet, dass** der Randbereich (20) eine umlaufende Kante (30) aufweist, auf welcher der mindestens eine Mitnehmer (13) angeordnet ist, wobei der Axialbereich (13a) des mindestens einen Mitnehmers (13) von der umlaufenden Kante (30) in Richtung des Deckels(11) herausragt.

9. Küchengerät (1) nach einem der vorherigen Ansprüche, **dadurch gekennzeichnet, dass** der Randbereich (20) eine umlaufende Außenfläche (31) aufweist, auf welcher der mindestens eine Mitnehmer (13) angeordnet ist, wobei der Radialbereich (13b) des mindestens einen Mitnehmers (13) in Richtung des Deckels (11) und/oder Verarbeitungsbehälter (12) aus der Außenfläche (31) herausragt.

10. Küchengerät (1) nach einem der vorherigen Ansprüche, **dadurch gekennzeichnet, dass** der mindestens eine Mitnehmer (13) integral mit dem Verarbeitungswerkzeug (10) ausgebildet ist.

11. Küchengerät (1) nach einem der vorherigen Ansprüche, **dadurch gekennzeichnet, dass** das Verarbeitungswerkzeug (10) aus Kunststoff herstellbar ist.

12. Küchengerät (1) nach einem der vorherigen Ansprüche, **dadurch gekennzeichnet, dass** zwischen dem Randbereich (20) des Verarbeitungswerkzeugs (10) und dem Deckel (11) ein Spalt (A) ausgebildet ist, in welchem der Axialbereich (13a) des Mitnehmers (13) rotiert.

13. Küchengerät (1) nach einem der vorherigen Ansprüche, **dadurch gekennzeichnet, dass** zwischen dem Randbereich (20) des Verarbeitungswerkzeugs (10) und dem Deckel (11) ein weiterer radial verlaufender Spalt (R) ausgebildet ist, in welchem der Radialbereich (13b) des Mitnehmers (13) rotiert.

14. Küchengerät (1) nach einem der vorherigen Ansprüche, **dadurch gekennzeichnet, dass** das Verarbeitungswerkzeug (10) einen Antriebsbereich (35) aufweist, der mindestens einen Antriebsmitnehmer (33) umfasst, der im Wesentlichen einen zur Rotationsachse (14) parallel verlaufenden Antriebsmitnehmeraxialbereich (33a) aufweist.

## Claims

1. Kitchen appliance (1), especially kitchen machine or food processor, with a processing container (12), a cover (11) for the processing container (12) and a processing tool (10) driven by a drive unit (15) around an axis of rotation (14) for processing foodstuffs, wherein the processing tool (10) has at least one follower (13) for mechanical release of at least one layer of foodstuffs (21) forming during the operation of the kitchen appliance adhering to the cover (11) and/or processing container (12), **characterised in that** the processing tool (10) is embodied rotationally-symmetrical with a periphery (30a) in the edge area (20), wherein a plurality of followers (13) is disposed on the periphery (30a).

2. Kitchen appliance (1) according to claim 1, **characterised in that** the processing tool (10) has an edge area (20) running around the axis of rotation (14).

3. Kitchen appliance (1) according to claim 1 or 2, **characterised in that** the at least one follower (13) is disposed on the edge area (20).

4. Kitchen appliance (1) according to one of the preceding claims, **characterised in that** the edge area (20) runs along an inner surface (25) of the cover (11) and/or the processing container (12).

5. Kitchen appliance (1) according to claim 1, **characterised in that** at least two followers (13) are disposed symmetrically on the periphery (30a), such that the arc distance (30b) between the followers (13) is the same in each case.

6. Kitchen appliance (1) according to one of the preceding claims, **characterised in that** the at least one follower (13) has an axial area (13a) which runs essentially in parallel to the axis of rotation (14).

7. Kitchen appliance (1) according to one of the preceding claims, **characterised in that** the at least one follower (13) has a radial area (13b) which extends radially in relation to the axis of rotation (14).

8. Kitchen appliance (1) according to one of the preceding claims, **characterised in that** the edge area (20) has a circumferential lip (30) on which the at least one follower (13) is disposed, wherein the axial area (13a) of the at least one follower (13) projects from the circumferential lip (30) in the direction of the cover (11).

9. Kitchen appliance (1) according to one of the preceding claims, **characterised in that** the edge area (20) has a surrounding outer surface (31), on which at least one follower (13) is disposed, wherein the radial area (13b) of the at least one follower (13) projects in the direction of the cover (11) and/or processing container (12) from the outer surface (31).

10. Kitchen appliance (1) according to one of the preceding claims, **characterised in that** the at least one follower (13) is embodied integral with the processing tool (10).

11. Kitchen appliance (1) according to one of the preceding claims, **characterised in that** the processing tool (10) is able to be made of plastic.

12. Kitchen appliance (1) according to one of the preceding claims, **characterised in that** a gap (A) is embodied between the edge area (20) of the processing tool (10) and the cover (11), in which the axial area (13a) of the follower (13) rotates.

13. Kitchen appliance (1) according to one of the preceding claims, **characterised in that** a further gap (R) running radially is embodied between the edge area (20) of the processing tool (10) and the cover (11), in which the radial area (13b) of the follower (13) rotates.

14. Kitchen appliance (1) according to one of the preceding claims, **characterised in that** the processing tool (10) has a drive area (35) having at least one drive dog (33), essentially having a drive dog axial area (33a) running in parallel to the axis of rotation (14).

## Revendications

1. Appareil de cuisine (1), notamment robot ménager ou food processor, comprenant un récipient de traitement (12), un couvercle (11) pour le récipient de traitement (12) et un outil de traitement (10) entraîné autour d'un axe de rotation (14) par une unité d'entraînement (15), destiné à traiter des aliments, l'outil de traitement (10) présentant au moins un entraîneur (13) pour le détachement mécanique d'une couche d'aliment (21) se formant pendant le fonctionnement de l'appareil de cuisine, adhérant sur le couvercle et/ou sur le récipient de traitement (12), **caractérisé en ce que** l'outil de traitement (10) est réalisé dans la zone de bord (20) en symétrie de rotation avec une circonférence (30a), une pluralité d'entraîneurs (13) étant disposés sur la circonférence (30a).

2. Appareil de cuisine (1) selon la revendication 1, **caractérisé en ce que** l'outil de traitement (10) présente une zone de bord (20) s'étendant autour de l'axe de rotation (14).

3. Appareil de cuisine (1) selon la revendication 1 ou 2, **caractérisé en ce que** l'au moins un entraîneur (13) est disposé sur la zone de bord (20).

4. Appareil de cuisine (1) selon l'une quelconque des revendications précédentes, **caractérisé en ce que** la zone de bord (20) s'étend le long d'une surface intérieure (25) du couvercle (11) et/ou du récipient de traitement (12).

5. Appareil de cuisine (1) selon la revendication 1, **caractérisé en ce qu'**au moins deux entraîneurs (13) sont disposés symétriquement sur la circonférence (30a) de manière à ce que l'écart du segment de cercle (30b) entre les entraîneurs soit respectivement identique.

6. Appareil de cuisine (1) selon l'une quelconque des revendications précédentes, **caractérisé en ce que** l'au moins un entraîneur (13) présente une zone axiale (13a) qui s'étend essentiellement parallèlement à l'axe de rotation (14).

7. Appareil de cuisine (1) selon l'une quelconque des revendications précédentes, **caractérisé en ce que** l'au moins un entraîneur (13) présente une zone radiale (13b) qui s'étend radialement par rapport à l'axe de rotation (14).

8. Appareil de cuisine (1) selon l'une quelconque des revendications précédentes, **caractérisé en ce que** la zone de bord (20) présente un bord périphérique (30) sur lequel est disposé au moins un entraîneur (13), la zone axiale (13a) de l'au moins un entraîneur (13) étant en saillie du bord périphérique (30) en direction du couvercle (11).

9. Appareil de cuisine (1) selon l'une quelconque des revendications précédentes, **caractérisé en ce que** la zone de bord (20) présente une surface extérieure périphérique (31) sur laquelle est disposé au moins l'un entraîneur (13), la zone radiale (13b) de l'au moins un entraîneur (13) dépassant hors de la surface extérieure (31) en direction du couvercle (11) et/ou du récipient de traitement (12).

10. Appareil de cuisine (1) selon l'une quelconque des revendications précédentes, **caractérisé en ce que** l'au moins un entraîneur (13) est réalisé intégralement avec l'outil de traitement (10).

11. Appareil de cuisine (1) selon l'une quelconque des revendications précédentes, **caractérisé en ce que** l'outil de traitement (10) est fabricable en matière plastique.

12. Appareil de cuisine (1) selon l'une quelconque des revendications précédentes, **caractérisé en ce qu'**une fente (A) est formée entre la zone de bord (20) de l'outil de traitement (10) et le couvercle (11), dans laquelle fente la zone axiale (13a) de l'entraîneur (13) est en rotation.

13. Appareil de cuisine (1) selon l'une quelconque des revendications précédentes, **caractérisé en ce qu'**une fente supplémentaire (R) s'étendant radialement est formée entre la zone de bord (20) de l'outil de traitement (10) et le couvercle (11), dans laquelle fente la zone radiale (13b) de l'entraîneur (13) est en rotation.

14. Appareil de cuisine (1) selon l'une quelconque des revendications précédentes, **caractérisé en ce que** l'outil de traitement (10) présente une zone d'entraînement (35) qui comprend au moins un entraîneur (33) lequel présente une zone axiale d'entraînement (33a) s'étendant essentiellement parallèlement à l'axe de rotation (14).
